# EUROPÄISCHE PATENTSCHRIFT

(11) **EP 2 296 940 B1**
(45) Veröffentlichungstag und Bekanntmachung des Hinweises auf die Patenterteilung: **07.03.2012**
(21) Anmeldenummer: 09776752.9
(22) Anmeldetag: 17.06.2009
(51) Int. Cl.: B60R 13/00, B60R 13/02

(54) **DEKORELEMENT MIT ZWEI UNTERSCHIEDLICH VEREDELTEN OBERFLÄCHENBEREICHEN**
DECORATIVE ELEMENT HAVING TWO DIFFERENTLY REFINED SURFACE REGIONS
ÉLÉMENT DÉCORATIF COMPRENANT DEUX ZONES DE SURFACE FAÇONNÉES DE MANIÈRE DIFFÉRENTE

(30) Priorität: 15.07.2008 DE 102008033111
(43) Veröffentlichungstag der Anmeldung: 23.03.2011
(73) Patentinhaber: Bayerische Motoren Werke Aktiengesellschaft, 80809 München (DE)
(72) Erfinder: KUHN, Ralf, 85716 Unterschleissheim (DE)
(86) Internationale Anmeldenummer: PCT/EP2009/004345
(87) Internationale Veröffentlichungsnummer: WO 2010/006674

(56) Entgegenhaltungen:
- FR-A1- 2 892 989
- US-A1- 2007 085 361

## Beschreibung

Die Erfindung betrifft ein Dekorelement mit einem ersten Bereich und einem zweiten Bereich, wobei der erste Bereich eine erste veredelte Oberfläche und der zweite Bereich eine zweite, von der ersten Oberfläche unterschiedlich veredelte Oberfläche aufweist.

Dekorelemente mit zwei unterschiedlich veredelten Oberflächen werden z.B. im Fahrzeugbau, insbesondere im Fahrzeuginnenraum häufig eingesetzt, um bestimmte optische und/oder haptische Effekte zu erzielen. Werden derartige Dekorelemente verwendet, müssen die einzelnen Bereiche entweder aufwändig maskiert werden, um eine gegenseitige Beeinträchtigung der verschiedenen Bereiche zu unterbinden, oder jeweils eine Oberfläche ist auf einem eigenen Träger aufgebracht, die dann zusammengefügt werden müssen.

Eine Maskierung der einzelnen Bereiche ist aufwändig und teuer. Die Verwendung individueller Träger erfordert jeweils ein eigenes Werkzeug. Für das Zusammenfügen sind weitere Arbeitsgänge und Bauteile erforderlich. Mehrere Bauteile erfordern darüber hinaus eine aufwändige Prozesssteuerung, da mehrere Bauteile im Produktionsprozess gesteuert werden müssen.

Aus der FR-A-2892989 ist bereits ein Dekorelement mit einem ersten Bereich und einem zweiten Bereich nach dem Oberbegriff von Anspruch 1 bekannt, wobei der erste Bereich eine erste veredelte Oberfläche und der zweite Bereich eine zweite, von der ersten Oberfläche unterschiedlich veredelte Oberfläche aufweist.

Es ist daher Aufgabe der vorliegenden Erfindung, ein Dekorelement der eingangs genannten Art anzugeben, welches einfacher, preisgünstiger und leichter herzustellen ist. Erfindungsgemäß wird diese Aufgabe bei einem Dekorelement mit einem ersten Bereich und einem zweiten Bereich, wobei der erste Bereich eine erste veredelte Oberfläche und der zweite Bereich eine zweite, von der ersten Oberfläche unterschiedlich veredelte Oberfläche aufweist, dadurch gelöst, dass der erste Bereich auf einer Vorderseite und der zweite Bereich auf einer Rückseite eines gemeinsamen Grundkörpers ausgebildet sind, und dass der zweite Bereich derart verschwenkbar ist, dass er neben den ersten Bereich einschwenkbar ist und in dieser verschwenkten Stellung die veredelten Oberflächen beider Bereiche in die gleiche Richtung weisen.

Infolge dieser Ausgestaltung wird nur ein einziges Bauteil in Form eines Grundkörpers benötigt, zu dessen Herstellung auch nur ein einziges Werkzeug erforderlich ist. Da die beiden Oberflächen zunächst voneinander weg weisen und auf verschiedenen Seiten des Grundkörpers liegen, können die beiden Oberflächen unterschiedlich veredelt werden, ohne das aufwändige Kaschierungsarbeiten erforderlich sind. Da das gesamte Dekorelement nur aus einem einzigen Bauteil besteht, wird auch die Prozesssteuerung vereinfacht.

Die Unteransprüche beinhalten vorteilhafte Weiterbildungen und Ausgestaltungen der Erfindung.

Nach einer vorteilhaften Weiterbildung ist zwischen dem ersten Bereich und dem zweiten Bereich ein Filmscharnier vorgesehen. Durch ein derartiges Filmscharnier, das beim Herstellungsprozess gleich mit erzeugt werden kann, lässt sich die Verschwenkbarkeit des zweiten Bereichs gegenüber dem ersten Bereich auf einfache Weise realisieren.

Bei den unterschiedlich veredelten Oberflächen der beiden Bereiche kann es sich nach einer bevorzugten Ausgestaltung um eine kaschierte und eine lackierte Oberfläche handeln. Jedoch sind auch verschiedenfarbig lackierte Oberflächen möglich.

Damit die verschwenkte Stellung des zweiten Bereichs dauerhaft beibehalten werden kann, ist der zweite Bereich vorteilhafterweise über eine kraft- und/oder formschlüssige Verbindung in der verschwenkten Stellung fixierbar.

Besonders einfach gestaltet sich die Fixierung über eine Clip-Verbindung. Dies hat darüber hinaus noch den Vorteil, dass zur Fixierung keine weiteren Werkzeuge erforderlich sind, da die beiden Bereiche einfach nur zusammengedrückt werden müssen.

Wenn gemäß einer vorteilhaften Ausgestaltung die beiden veredelten Oberflächen in der verschwenkten Stellung im Wesentlichen in einer gemeinsamen Ebene angeordnet sind, ergibt sich auch eine optisch ansprechende Gestaltung des Dekorelementes.

Der Grundkörper besteht vorteilhafterweise aus einem Spritzgussteil. Ein solches ist leicht und preisgünstig herzustellen. Darüber hinaus kann der Veredelungsprozess u. U. auch gleich in den Herstellungsprozess integriert werden.

Weitere Einzelheiten, Merkmale und Vorteile der Erfindung ergeben sich aus der nachfolgenden Beschreibung und den Figuren. Es zeigt:
- Figur 1: eine Ansicht des erfindungsgemäßen Dekorelementes im Grundzustand, und
- Figur 2: eine Ansicht des erfindungsgemäßen Dekorelementes im Endzustand.

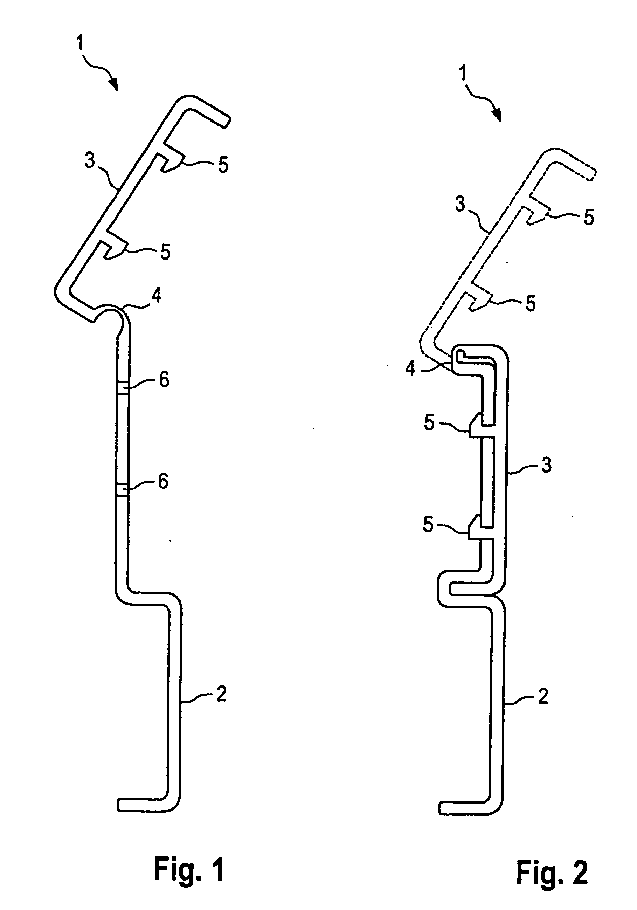

In Figur 1 ist ein Dekorelement in seinem Grundzustand und in Figur 2 in seinem Endzustand dargestellt.

Das Dekorelement weist einen Grundkörper 1 auf, der vorteilhafterweise aus einem Spritzgussteil besteht. Der Grundkörper 1 hat einen ersten Bereich 2 und einen zweiten Bereich 3. Beide Bereiche 2, 3 sind mit unterschiedlich veredelten Oberflächen versehen. Beispielsweise kann die Oberfläche des ersten Bereichs 2 kaschiert sein, während die Oberfläche des zweiten Bereichs 3 lackiert ist. Die beiden Oberflächen können jedoch auch in unterschiedlichen Farben lackiert sein.

Im Grundzustand (vgl. Figur 1) ist der erste Bereich 2 auf einer Vorderseite des Grundkörpers 1 und der zweite Bereich 3 auf einer Rückseite des Grundkörpers 1 ausgebildet.

Da die beiden Bereiche 2, 3 im Grundzustand auf verschiedenen Seiten des Grundkörpers 1 liegen ist es möglich, die Oberflächen beider Bereiche 2, 3 unterschiedlich zu veredeln, ohne dass sich bei der Veredelung die beiden Bereiche 2, 3 gegenseitig beeinflussen bzw. beeinträchtigen können.

Zwischen beiden Bereichen 2, 3 ist ein Filmscharnier 4 ausgebildet, das durch eine Materialschwächung in dem Grundkörper 1 gebildet ist.

An der der veredelten Oberfläche abgewandten Seite des zweiten Bereichs 3 sind Raststifte 5 vorgesehen, welche mit an dem Grundkörper 1 ausgebildeten Aufnahmen 6 zusammenwirken und eine Clip-Verbindung bilden.

Statt der Raststifte 5 und der Aufnahmen 6 kann auch eine beliebige andere kraft- und/oder formschlüssige Verbindung vorgesehen sein.

Wenn das Grundelement 1 verwendet und in seinen Endzustand überführt werden soll, wird der zweite Bereich 3 im Uhrzeigersinn um das Filmscharnier 4 solange verschwenkt, bis er neben den ersten Bereich 2 zu liegen kommt. Dieser Zustand ist in Figur 2 dargestellt. In dieser Stellung wird der zweite Bereich 3 durch die Clip-Verbindung oder eine andere kraft- und/oder formschlüssige Verbindung gehalten, indem beispielsweise die Raststifte 5 in die Aufnahmen 6 einrasten. Nunmehr liegen die beiden unterschiedlich veredelten Bereiche 2, 3 im Wesentlichen in einer Ebene nebeneinander und weisen beide in die gleiche Richtung.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1: Grundkörper
- 2: erster Bereich
- 3: zweiter Bereich
- 4: Filmscharnier
- 5: Raststift
- 6: Aufnahme

## Patentansprüche

1. Dekorelement mit einem ersten Bereich und einem zweiten Bereich, wobei der erste Bereich eine erste veredelte Oberfläche und der zweite Bereich eine zweite, von der ersten Oberfläche unterschiedlich veredelte Oberfläche aufweist, **dadurch gekennzeichnet, dass** der erste Bereich (2) auf einer Vorderseite und der zweite Bereich (3) auf einer Rückseite eines gemeinsamen Grundkörpers (1) ausgebildet sind, und dass der zweite Bereich (3) derart verschwenkbar ist, dass er neben den ersten Bereich (2) einschwenkbar ist und in dieser verschwenkten Stellung die veredelten Oberflächen beider Bereiche (2, 3) in die gleiche Richtung weisen.

2. Dekorelement nach Anspruch 1, **dadurch gekennzeichnet, dass** zwischen dem ersten Bereich (2) und dem zweiten Bereich (4) ein Filmscharnier (4) vorgesehen ist.

3. Dekorelement nach Anspruch 1 oder 2, **dadurch gekennzeichnet, dass** die eine veredelte Oberfläche kaschiert und die andere veredelte Oberfläche lackiert ist.

4. Dekorelement nach einem der Ansprüche 1 bis 3, **dadurch gekennzeichnet, dass** der zweite Bereich (3) über eine kraft- und/oder formschlüssige Verbindung (5, 6) in der verschwenkten Stellung fixierbar ist.

5. Dekorelement nach Anspruch 4, **dadurch gekennzeichnet, dass** der zweite Bereich (3) über eine Clip-Verbindung in der verschwenkten Stellung fixierbar ist.

6. Dekorelement nach einem der Ansprüche 1 bis 5, **dadurch gekennzeichnet, dass** in der verschwenkten Stellung die beiden veredelten Oberflächen im Wesentlichen in einer gemeinsamen Ebene angeordnet sind.

7. Dekorelement nach einem der Ansprüche 1 bis 6, **dadurch gekennzeichnet, dass** der Grundkörper (1) aus einem Spritzgussteil besteht.

## Claims

1. A decorative element having a first region and a second region, wherein the first region has a first finished surface and the second region has a second finished surface that is different from the first surface, **characterised in that** the first region (2) is formed on a front side and the second region (3) is formed on a rear side of a common basic body (1), and **in that** the second region (3) can be pivoted in such a way that it can be pivoted in next to the first region (2) and, in this pivoted position, the finished surfaces of the two regions (2, 3) point in the same direction.

2. A decorative element according to claim 1, **characterised in that** a film hinge (4) is provided between the first region (2) and the second region (3).

3. A decorative element according to claim 1 or claim 2, **characterised in that** one finished surface is laminated and the other finished surface is varnished.

4. A decorative element according to any one of claims 1 to 3, **characterised in that** the second region (3) can be fixed in the pivoted position by means of a non-positive and/or positive connection (5, 6).

5. A decorative element according to claim 4, **characterised in that** the second region (3) can be fixed in the pivoted position by means of a clip connection.

6. A decorative element according to any one of claims 1 to 5, **characterised in that** the two finished surfaces are substantially arranged in a common plane in the pivoted position.

7. A decorative element according to any one of claims 1 to 6, **characterised in that** the basic body (1) comprises an injection-moulded part.

## Revendications

1. Elément décoratif ayant une première zone et une seconde zone,
* la première zone ayant une surface traitée et la seconde zone une seconde surface traitée différente de celle de la première surface, élément décoratif **caractérisé en ce que**
- la première zone (2) est réalisée sur la face avant et la seconde zone (3) sur la face arrière d'un corps de base (1), commun, et
- la seconde zone (3) peut être pivotée de façon à venir à côté de la première zone (2) et dans cette position pivotée, les surfaces traitées des deux zones (2, 3) sont tournées dans la même direction.

2. Elément décoratif selon la revendication 1,
**caractérisé par**
une charnière (4) en forme de film réalisée entre la première zone (2) et la seconde zone (4).

3. Elément décoratif selon la revendication 1 ou 2,
**caractérisé en ce que**
la surface traitée est marouflée et l'autre surface traitée est laquée.

4. Elément décoratif selon l'une des revendications 1 à 3,
**caractérisé en ce que**
les deux zones (3) sont fixées en position pivotée par une liaison par la force et/ou par la forme (5, 6).

5. Elément décoratif selon la revendication 4,
**caractérisé en ce que**
la seconde zone (3) est fixée en position pivotée par une liaison par enclipage.

6. Elément décoratif selon l'une des revendications 1 à 5,
**caractérisé en ce que**
dans la position pivotée, les deux surfaces traitées se trouvent pratiquement dans un même plan.

7. Elément décoratif selon l'une des revendications 1 à 6,
**caractérisé en ce que**
le corps de base (1) est une pièce injectée.
